Europäisches Patentamt

European Patent Office

Office européen des brevets

(19)

(11) Numéro de publication : **0 643 501 A1**

(12) # DEMANDE DE BREVET EUROPEEN

(21) Numéro de dépôt : **94402001.5**

(22) Date de dépôt : **08.09.94**

(51) Int. Cl.⁶ : **H04J 3/07**

(30) Priorité : **10.09.93 FR 9310823**

(43) Date de publication de la demande :
**15.03.95 Bulletin 95/11**

(84) Etats contractants désignés :
**AT BE CH DE ES GB IT LI NL SE**

(71) Demandeur : **ALCATEL CIT**
**12 Rue de la Baume**
**F-75008 Paris (FR)**

(72) Inventeur : **Etienne, Jean Paul**
**Tremelven Bihan**
**22700 Saint Quay-Perros (FR)**

(74) Mandataire : **Sciaux, Edmond et al**
**c/o SOSPI,**
**14-16 rue de la Baume**
**F-75008 Paris (FR)**

(54) **Dispositif de lissage de sauts de phase susceptibles d'affecter un signal de rythme, et application au filtrage de la gigue de déjustification d'un train numérique.**

(57)    Dispositif de lissage de sauts de phase susceptibles d'affecter un signal de rythme, et préalablement signalés par un signal dit d'indication de sauts de phase, caractérisé en ce qu'il comporte :

— des moyens (1) dits de retard pour appliquer aux impulsions dudit signal de rythme un retard qui, en l'absence de sauts de phase, est constant et égal à une valeur dite nominale notée No, et, en présence de saut de phase, devient instantanément, pour l'impulsion dudit signal de rythme affectée par ce saut de phase, égal à Nc+N ou à NC-N suivant que ledit saut de phase a une amplitude égale à -N ou à +N, où Nc désigne le retard appliqué à l'impulsion dudit signal de rythme précédant celle affectée par ce saut de phase, puis, pour un ensemble d'impulsions suivantes, varie progressivement, pour le saut de phase considéré, suivant le cas de Nc+N à Nc ou de Nc-N à Nc, la valeur nominale No étant déterminée de façon à ce que lesdites valeurs de retard restent positives même dans le cas de sauts de phase positifs consécutifs,

— des moyens (2), commandés par ledit signal d'indication de sauts de phase, pour déterminer lesdites valeurs de retard.

FIG.1

La présente invention concerne d'une manière générale la transmission numérique.

La présente invention concerne plus particulièrement un dispositif de lissage de sauts de phase susceptibles d'affecter un signal dit de rythme associé à un train numérique transmis.

La présente invention est notamment applicable au filtrage de la gigue dite de déjustification d'un train numérique, c'est-à-dire de la gigue due à l'élimination, en réception de ce train, d'éléments binaires, dits de justification, introduits au cours de la formation de ce train et permettant d'adapter le rythme d'un train numérique, non justifié, à transmettre, au rythme offert pour sa transmission.

La présente invention est notamment applicable au cas de trains numériques utilisant, pour leur formation, la technique de justification dite positive-négative, dont on rappelle qu'elle est utilisée dans le cas où le rythme du train numérique non justifié à transmettre a une valeur nominale égale à celle du rythme offert pour sa transmission.

La présente invention est ainsi notamment applicable au cas d'adaptation de rythme effectuée à l'intérieur d'un réseau de transmission synchrone, et notamment à l'intérieur d'un réseau de transmission synchrone sur lequel sont transmis des trains numériques formés suivant la hiérarchie de multiplexage synchrone telle que définie dans les recommandations G707, G708, G709 du CCITT.

Pour résoudre les problèmes liés aux variations de temps de propagation dans un tel réseau, ou encore à une précision insuffisante des horloges de référence prévues aux noeuds d'un tel réseau, voire à un désynchronisme de ce réseau, la formation de trains numériques suivant une telle hiérarchie de multiplexage utilise en effet la technique de justification positive-négative. Plus précisément, des emplacements temporels des trains ainsi formés, en l'occurrence des groupes de huit éléments binaires, ou octets, prévus pour des éléments binaires dits d'information, sont, dans le cas de justification positive, remplacés par des éléments binaires de justification (ou de bourrage), et inversement, des emplacements temporels, en l'occurrence des groupes de huit éléments binaires, ou octets, prévus pour des éléments binaires de justification (ou de bourrage), sont, dans le cas de justification négative, remplacés par des éléments binaires dits d'information.

La présente invention est néanmoins également applicable au cas de trains numériques utilisant, pour leur formation, la technique de justification positive, dont on rappelle qu'elle est utilisée dans le cas où le rythme du train numérique non justifié à transmettre a une valeur nominale inférieure à celle du rythme offert pour sa transmission.

La présente invention est en outre également applicable au cas de trains numériques utilisant pour leur formation, et à des niveaux différents, la technique de justification positive et la technique de justification positive-négative.

Il est connu, pour restituer, en réception, le rythme d'un train numérique non justifié, à partir d'un train numérique justifié suivant la technique de justification positive, après élimination, de ce dernier, de ses éléments binaires de justification, d'utiliser une boucle à verrouillage de phase permettant d'asservir le rythme de lecture d'une mémoire-tampon dans laquelle est écrit le train numérique incident, après élimination de ses éléments binaires de justification, au rythme d'écriture de cette mémoire-tampon, tout en réalisant un filtrage de type passe-bas.

Un problème se pose, qui est que ladite gigue de déjustification positive comporte des composantes à très basse fréquence, qui ne peuvent donc être éliminées suivant la technique ainsi rappelée.

Ce problème se pose de façon plus aiguë encore dans le cas de justification positive-négative, puisque ladite gigue de déjustification comporte alors exclusivement des composantes à très basse fréquence.

En outre, dans le cas notamment de transmission à travers un réseau synchrone sur lequel sont transmis des trains numériques formés suivant la hiérarchie de multiplexage synchrone telle que définie dans les recommandations G707, G708, G709 du CCITT, et comme rappelé plus haut, ladite gigue a en outre une amplitude relativement grande, de l'ordre de plusieurs octets, alors que les équipements destinés à traiter les trains numériques non justifiés ainsi restitués ont en général une contrainte maximale de gigue admissible relativement faible.

La présente invention a pour objet un dispositif de lissage de sauts de phase susceptibles d'affecter un signal de rythme, et permettant notamment, dans son application au filtrage de la gigue de déjustification d'un train numérique, d'apporter une solution à ce problème.

La présente invention a ainsi pour objet un dispositif de lissage de sauts de phase susceptibles d'affecter un signal de rythme, et préalablement signalés par un signal dit d'indication de sauts de phase, ce dispositif étant essentiellement caractérisé en ce qu'il comporte:

- des moyens dits de retard pour appliquer aux impulsions dudit signal de rythme un retard qui, en l'absence de sauts de phase, est constant et égal à une valeur dite nominale notée $N_o$, avec $N_o$ positif, ou nul dans le cas de sauts de phase uniquement négatifs, et, en présence de saut de phase, devient instantanément, pour l'impulsion dudit signal de rythme affectée par ce saut de phase, égal à $N_c+N$ ou à $N_c-N$ suivant que ledit saut de phase a une amplitude égale à $-N$ ou à $+N$, avec $N$ positif, où $N_c$ désigne le retard appliqué à l'impulsion dudit signal de rythme précédant celle affectée par ce saut de phase, puis, pour un ensemble d'impulsions suivantes, varie progressivement, pour le saut de phase considéré, de Nc+N à Nc ou de Nc-N à Nc, suivant que ce saut de phase a une amplitude égale à -N ou à +N, la valeur nominale No étant déterminée de façon à ce que lesdites valeurs de retard restent positives même dans le cas de sauts de phase positifs consécutifs,

- des moyens, commandés par ledit signal d'indication de sauts de phase, pour déterminer lesdites valeurs de retard.

La présente invention a également pour objet l'application d'un tel dispositif au filtrage de la gigue de déjustification d'un train numérique.

D'autres objets et caractéristiques de la présente invention apparaîtront à la lecture de la description suivante d'exemples de réalisation, faite en relation avec les dessins ci-annexés dans lesquels:

- la figure 1 est un schéma d'un exemple de réalisation d'un dispositif suivant la présente invention,
- la figure 2 est un diagramme destiné à illustrer le fonctionnement d'un dispositif suivant la présente invention,
- la figure 3 est un schéma d'un autre exemple de réalisation d'un dispositif suivant l'invention,
- la figure 4 est un schéma destiné à illustrer l'application d'un dispositif suivant la présente invention au filtrage de la gigue de déjustification d'un train numérique.

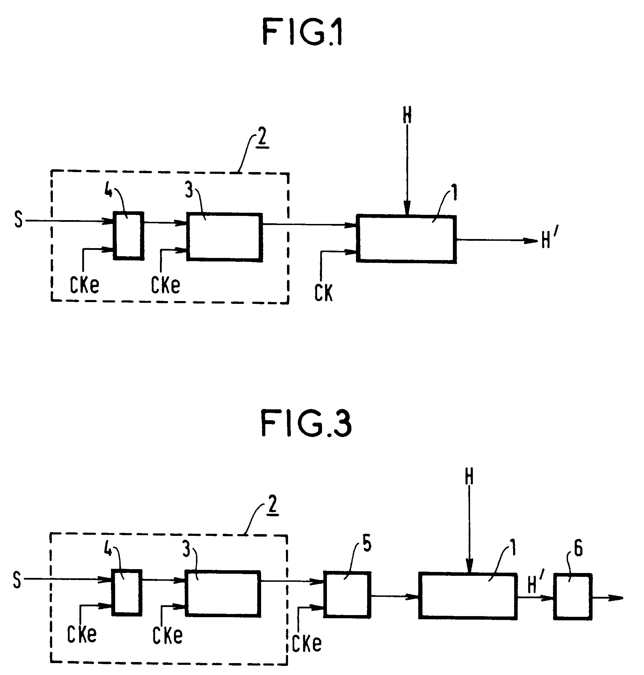

Le dispositif de lissage de sauts de phase illustré sur la figure 1 est destiné à lisser les sauts de phase susceptibles d'affecter le signal de rythme, noté H, associé à un train numérique et préalablement signalés par un signal dit d'indication de sauts de phase, noté S.

A titre d'exemple, dans le cas de l'application au filtrage de la gigue de déjustification d'un train numérique, ladite indication de sauts de phase consiste en une indication de justification, et, dans le cas de l'application au filtrage de la gigue de déjustification positive-négative d'un train numérique formé suivant la hiérarchie de multiplexage synchrone telle que définie dans les recommandations G707, G708, G709 du CCITT, ladite indication de sauts de phase consiste en une indication de justification particulière appelée ajustement de pointeur.

Le dispositif illustré sur la figure 1 comporte:

- des moyens dits de retard, notés 1, pour appliquer aux impulsions dudit signal de rythme un retard qui, en l'absence de sauts de phase, est constant et égal à une valeur dite nominale notée No, avec No positif, ou nul dans le cas de sauts de phase uniquement négatifs, et, en présence de saut de phase, devient instantanément, pour l'impulsion dudit signal de rythme affectée par ce saut de phase, égal à Nc+N ou à Nc-N suivant que ledit saut de phase a une amplitude égale à -N où à +N, avec N positif, où Nc désigne le retard appliqué à l'impulsion dudit signal de rythme précédant celle affectée par ce saut de phase, puis, pour un ensemble d'impulsions suivantes, varie progressivement, pour le saut de phase considéré, de Nc+N à Nc, ou de Nc-N à Nc, suivant que ce saut de phase a une amplitude égale à -N ou à +N, la valeur nominale No étant déterminée de façon à ce que lesdites valeurs de retard restent positives même dans le cas de sauts de phase positifs consécutifs,

- des moyens, notés 2, commandés par ledit signal d'indication de sauts de phase, pour déterminer lesdites valeurs de retard.

Les moyens 1 sont, dans l'exemple de réalisation considéré, constitués par un décompteur qui effectue un décomptage à partir d'une valeur dite de chargement fournie par les moyens 2, ledit décomptage étant déclenché par les impulsions du signal de rythme H.

Le signal d'horloge, noté CK, déterminant le rythme du décomptage effectué par le décompteur 1, est un signal d'horloge de fréquence par exemple égale, dans le cas où l'unité utilisée pour exprimer lesdits sauts de phase est l'élément binaire, à la fréquence dite nominale (c'est-à-dire en l'absence de sauts de phase) du signal de rythme.

Les moyens 2 comportent, dans l'exemple de réalisation illustré, un filtre numérique, 3, recevant le signal d'indication de sauts de phase préalablement converti en numérique par un convertisseur analogique-numérique 4.

Le convertisseur analogique-numérique 4 et le filtre numérique 3 reçoivent en outre un signal dit d'horloge d'échantillonnage, noté CKe, de fréquence en l'occurrence supérieure à deux fois la fréquence maximale d'apparition desdits sauts de phase, et inférieure ou égale à la fréquence nominale du signal de rythme H.

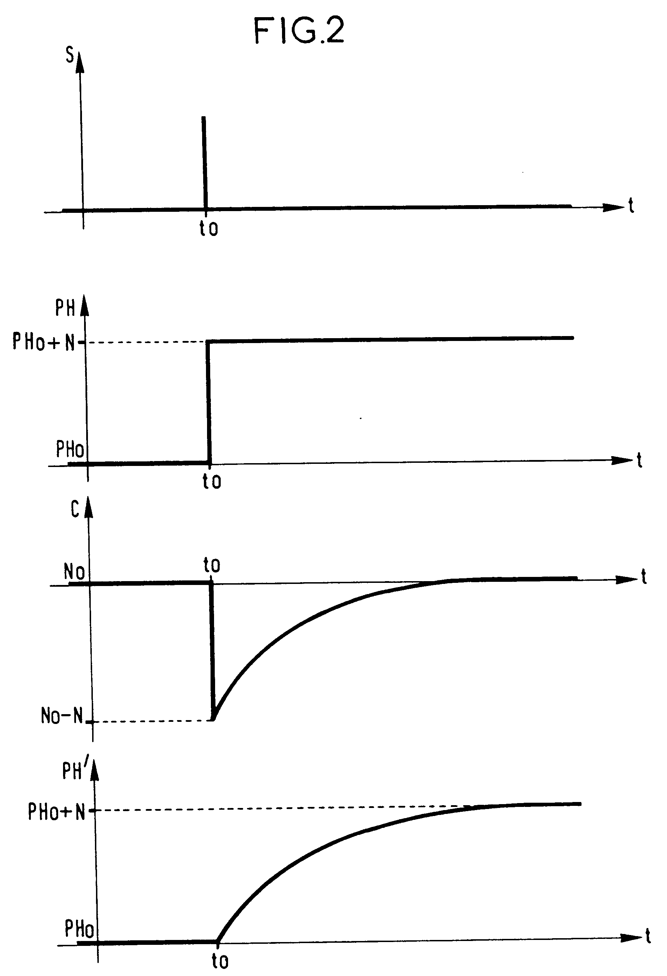

On a illustré sur la figure 2 un exemple de forme possible pour le signal S d'indication de sauts de phase. Dans cet exemple ce signal S présente des impulsions aux instants, tels que to, pour lesquels se produit un saut de phase. On notera que dans le cas de sauts de phase pouvant être positifs ou négatifs, le signal d'indication de sauts de phase sera alors constitué de deux signaux tels que S, correspondant l'un au cas de sauts de phase positifs, l'autre au cas de sauts de phase négatifs.

On a également illustré sur la figure 2 un signal, noté PH, indiquant la phase du signal de rythme H, ce signal PH ayant une forme dite en échelons, les changements de valeur desdits échelons se produisant aux instants tels que to mentionnés plus haut. A titre d'exemple le cas d'un saut de phase d'amplitude égal à +N est illustré sur la figure 2, portant la phase du signal PH d'une valeur PHo (avant l'instant to) à une valeur PHo+N (après l'instant to).

On a également illustré sur la figure 2 un signal, noté C, constitué par le signal analogique correspondant au signal numérique obtenu en sortie du filtre numérique 3, à titre d'exemple dans le cas où ce filtre est un filtre du premier ordre, et plus particulièrement, dans l'exemple considéré où le signal S d'indication de sauts de phase est un signal du type en impulsions, un filtre passe-bas du premier ordre. On notera que dans le cas où le signal S serait un signal du type en échelons, il s'agirait d'un filtre passe-haut.

En l'absence de sauts de phase du signal de rythme H, les valeurs fournies par le filtre numérique 3 sont constantes et égales à la valeur dite nominale notée No, et les impulsions du signal de rythme H sont donc retardées d'un retard constant et égal à No.

A un instant tel que to où se produit un saut de phase, le filtre numérique 3 fournit une valeur égale à No-N dans le cas (plus particulièrement illustré sur la figure 2) d'un saut de phase d'amplitude égale à +N, ou à No+N dans le cas d'un saut de phase d'amplitude égale à -N.

Dans ces conditions l'impulsion du signal de rythme H' obtenu en sortie du décompteur 1, correspondant à l'impulsion du signal de rythme H qui est affectée par le saut de phase considéré, n'est pas affectée par ce saut de phase, comme illustré sur la figure 2 où l'on voit que la phase, notée PH', du signal de rythme H' ne présente pas de discontinuité à l'instant to.

Le saut de phase ainsi annulé est ensuite regénéré de façon progressive. Le filtre numérique 3 fournit en effet, à partir de l'instant to, et à titre d'exemple pour le cas d'un saut de phase d'amplitude égale à +N, une séquence de valeurs, notées Ni, du type No-N+ni, avec ni positif, croissant avec le rang i de la valeur dans cette séquence, de façon à ce que ces valeurs tendent vers la valeur No, en l'occurrence exponentiellement dans le cas illustré sur la figure 2. La phase PH' du signal de rythme H' croît alors, avec la même variation exponentielle, vers la valeur PHo+N.

Dans le cas, non illustré sur la figure 2, où un nouveau saut de phase se produirait au cours de la génération de la séquence de valeurs Ni, le filtre numérique 3 fournirait, pour l'impulsion du signal de rythme affectée par ce saut de phase, une valeur égale à Nc-N ou à Nc+N suivant que ce saut de phase a une amplitude égale à +N ou une amplitude égale à -N, la valeur Nc étant égale à celle des valeurs de la séquence de valeurs Ni qui est fournie pour l'impulsion du signal de rythme qui précède celle affectée par ce saut de phase. Le filtre numérique 3 fournirait ensuite, pour un ensemble d'impulsions suivantes, et pour ce même saut de phase, une séquence de valeurs variant progressivement de Nc+N à Nc ou de Nc-N à Nc, suivant que ce saut de phase a une amplitude égale à +N ou une amplitude égale à -N.

On notera que la valeur nominale No devra être déterminée, en fonction de la bande passante de ce filtre numérique, pour que, même dans le cas de sauts de phase positifs consécutifs, les valeurs de retard appliquées auxdits moyens de retard restent positives.

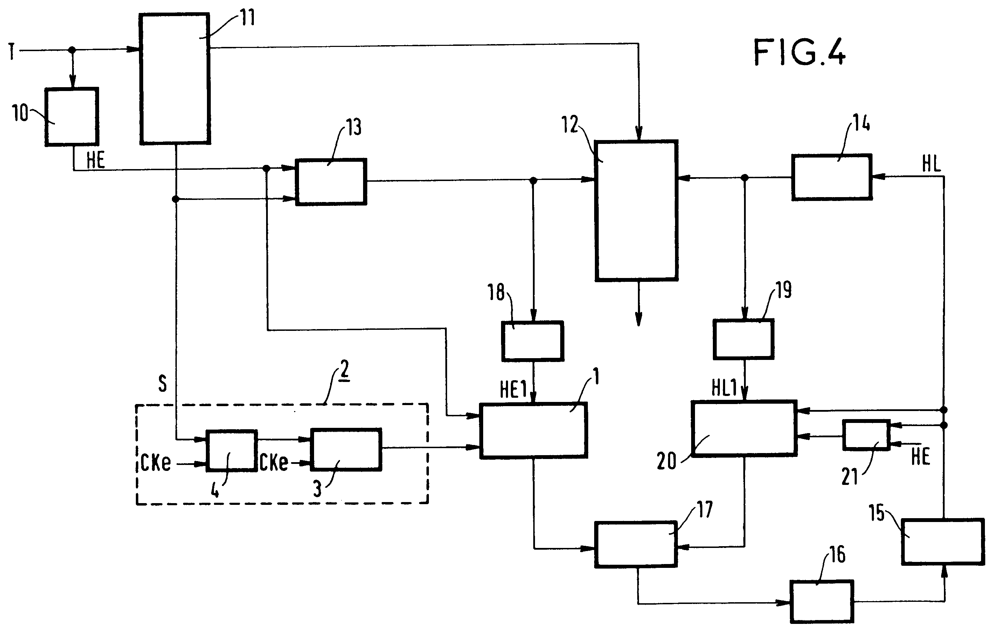

La figure 3 illustre une variante d'un dispositif suivant la présente invention, applicable au cas où les valeurs Ni issues du filtre numérique 3 comportent une partie entière et une partie fractionnaire, les retards apportés par le décompteur 1 et dus à cette partie fractionnaire s'exprimant alors en fractions de la période d'horloge de ce décompteur.

Cette variante comporte, en sortie du filtre numérique 3, des moyens, 5, pour convertir une valeur comportant une partie entière et une partie fractionnaire en une série de valeurs entières déterminées de façon à créer une modulation dans le temps de la position des impulsions du signal de rythme H' issu du décompteur 1, ladite modulation étant à son tour déterminée de façon à ce que la fréquence la plus basse du spectre de cette modulation, en dehors de sa composante continue, soit supérieure à la fréquence de coupure d'un filtre passe-bas, 6, prévu alors en sortie du décompteur 1, de façon à obtenir uniquement ladite composante continue en sortie de ce filtre. Les moyens 5 reçoivent également le signal d'horloge d'échantillonnage CKe. On notera que le traitement effectué par ces moyens 5 pourrait être intégré à celui effectué par le filtre numérique 3.

A titre d'exemple, en notant P ladite partie entière, et q ladite partie fractionnaire, avec $q=\dfrac{R}{S}$ (où R et S désignent des nombres entiers positifs, avec R<S), les moyens 6 génèrent R fois de suite la valeur P, puis R fois de suite la valeur P+1, et l'ensemble S fois de suite.

La figure 4 illustre l'application d'un dispositif suivant l'invention au filtrage de la gigue de déjustification d'un train numérique.

Le train numérique incident, noté T, est préalablement traité, suivant des principes connus et non rappelés ici, pour:

- en extraire, par un circuit noté 10, un signal de rythme, noté HE, donnant son rythme d'arrivée,
- en éliminer, par un circuit noté 11, les éléments binaires autres que des éléments binaires d'information, et notamment les éléments binaires de justification.

Ces éléments binaires d'information sont, également de façon connue, écrits dans une mémoire-tampon, notée 12, à des adresses fournies par un compteur d'adressage-écriture, 13, incrémenté par le signal de rythme HE seulement lorsqu'il y est autorisé par un signal issu du circuit 11 et constitué par exemple par le signal d'indication de justification lui-même, noté également S puisqu'il constitue ici le signal d'indication de sauts de phase.

Ces éléments binaires d'information sont, également de façon connue, lus dans la mémoire-tampon 12, à des adresses fournies par un compteur d'adressage-lecture, 14, incrémenté par un signal de rythme noté HL issu d'une boucle à verrouillage de phase.

Cette boucle à verrouillage de phase comporte, également de façon connue, un oscillateur commandable 15 fournissant ce signal de rythme HL, et commandé par le signal de sortie d'un filtre passe-bas, 16, recevant lui-même le signal de sortie d'un comparateur de phase, 17, donnant le déphasage entre des signaux représentatifs des rythmes d'écriture et de lecture de la mémoire-tampon.

Le dispositif illustré sur la figure 4 comporte en outre un détecteur d'états de comptage 18 et un détecteur d'états de comptage 19, permettant de détecter des états de comptage prédéterminés du compteur d'adressage-écriture 13 et du compteur d'adressage-lecture 14, avantageusement au nombre d'un seul par cycle d'adressage de la mémoire tampon (en vue d'éviter d'appliquer plusieurs sauts de phase à la boucle de verrouillage de phase au cours d'un même cycle d'adressage de la mémoire tampon) ces détecteurs d'états de comptage fournissant en l'occurrence lesdits signaux représentatifs des rythmes d'écriture et de lecture, ces signaux, notés respectivement HE1 et HL1, présentant alors des impulsions au moment du passage desdits compteurs d'adressage-écriture et d'adressage-lecture par lesdits états de comptage prédéterminés.

Le signal HE1 issu du détecteur 18 constitue le signal de rythme appliqué à un dispositif de lissage de sauts de phase suivant l'invention, comportant, à titre d'exemple comme celui illustré sur la figure 1, un décompteur 1 incrémenté en l'occurrence par le même signal HE que le compteur d'adressage-écriture 13, un filtre numérique 3, et un convertisseur analogique-numérique 4 recevant en l'occurrence le signal S d'indication de justification, élaboré, de façon connue et non rappelée ici, par un circuit pouvant par exemple être inclus dans le circuit 11.

On notera que dans le cas où le même signal S est appliqué à la fois au compteur d'adressage-écriture 13 et au filtre numérique 3, le signal S devant parvenir au filtre numérique 3 avant de parvenir au compteur d'adressage-écriture 13 (afin d'éviter de retransmettre tels quels les sauts de phase dûs à la déjustification, à la boucle à verrouillage de phase), il sera nécessaire de prévoir un élément de retard pour l'application de ce signal S à ce compteur d'adressage écriture.

Le signal issu du décompteur 1 constitue l'un des signaux appliqués au comparateur de phase 17.

L'autre signal appliqué au comparateur de phase 17 est obtenu en sortie de moyens dits de retard, 20, pour appliquer aux impulsions du signal HL1 représentatif du rythme de lecture de la mémoire-tampon, un retard constant et égal à une valeur notée Mo telle que:

$$No \times TE = Mo \times TL$$

où TE désigne la période du signal de rythme HE et où TL désigne la période du signal de rythme HL.

Dans l'exemple illustré sur la figure 4, les moyens de retard 20 comportent par exemple un décompteur déclenché par le signal HL1, incrémenté par le même signal de rythme HL que le compteur d'adressage-lecture 14, et recevant par ailleurs d'un circuit de calcul noté 21 une valeur de chargement fixe et égale à Mo, le circuit 21 recevant par conséquent les signaux HE et HL pour élaborer cette valeur Mo.

A titre d'exemple le dispositif de lissage de sauts de phase utilisé dans le dispositif illustré sur la figure 4 correspond à l'exemple de réalisation de la figure 1.

On notera que dans le cas où ce dispositif de lissage de sauts de phase correspondrait à l'exemple de réalisation de la figure 3, il ne serait pas nécessaire de prévoir un filtre passe-bas tel que celui noté 6 en plus du filtre passe-bas 16 déjà prévu dans la boucle à verrouillage de phase.

On notera en outre que dans le cas de l'application au filtrage de gigue de déjustification positive-négative d'un train numérique, les sauts de phase dus à cette déjustification étant relativement rares, la valeur No, et par conséquent également la valeur Mo, pourront être choisies égales à zéro.

**Revendications**

1/ Dispositif de lissage de sauts de phase susceptibles d'affecter un signal de rythme, et préalablement signalés par un signal dit d'indication de sauts de phase, caractérisé en ce qu'il comporte:
- des moyens (1) dits de retard pour appliquer aux impulsions dudit signal de rythme un retard qui, en l'absence de sauts de phase, est constant et égal à une valeur dite nominale notée No, avec No positif, ou nul dans le cas de sauts de phase uniquement négatifs, et, en présence de saut de phase, devient instantanément, pour l'impulsion dudit signal de rythme affectée par ce saut de phase, égal à Nc+N ou à Nc-N suivant que ledit saut de phase a une amplitude égale à -N ou à +N, avec N positif, où Nc désigne le retard appliqué à l'impulsion dudit signal de rythme précédant celle affectée par ce saut de phase, puis, pour un ensemble d'impulsions suivantes, varie progressivement, pour le saut de phase considéré, de Nc+N à Nc ou de Nc-N à Nc, suivant que ce saut de phase a une amplitude égale à -N ou à +N, la valeur No étant déterminée de façon à ce que lesdites valeurs de retard restent positives même dans le cas de sauts de phase positifs consécutifs,

- des moyens (2), commandés par ledit signal d'indication de sauts de phase, pour déterminer lesdites valeurs de retard.

2/ Dispositif selon la revendication 1, caractérisé en ce que lesdits moyens (2) pour déterminer lesdites valeurs de retard comportent un filtre numérique (3) fournissant, pour ledit ensemble d'impulsions suivantes, une séquence de valeurs Ni du type Nc+N-ni, ou Nc-N+ni, suivant que ledit saut de phase a une amplitude égale à -N ou une amplitude égale à +N, avec ni positif, croissant avec le rang i de la valeur dans cette séquence.

3/ Dispositif selon la revendication 2, caractérisé en ce que, dans le cas de valeur Ni comportant une partie entière et une partie fractionnaire, il comporte en outre:

- un filtre passe-bas (6) disposé en sortie desdits moyens de retard, et
- des moyens (5) pour convertir cette valeur comportant une partie entière et une partie fractionnaire en une série de valeurs entières déterminées de façon à créer une modulation dans le temps de la position des impulsions du signal de rythme issu desdits moyens de retard, ladite modulation étant à son tour déterminée de façon à ce que la fréquence la plus basse du spectre de cette modulation, en dehors de sa composante continue, soit supérieure à la fréquence de coupure dudit filtre passe-bas.

4/ Application d'un dispositif suivant l'une des revendications 1 à 3, au filtrage de la gigue de déjustification d'un train numérique, caractérisé en ce que:

- ledit signal d'indication de sauts de phase est un signal dit d'indication de justification,
- ledit signal de rythme est un signal représentatif du rythme d'écriture d'une mémoire-tampon (12) dans laquelle sont écrits les éléments binaires dits d'information dudit train numérique,
- le signal issu desdits moyens de retard (1) est appliqué à une première entrée d'un comparateur de phase (17) inclus dans une boucle à verrouillage de phase fournissant le rythme de lecture de ladite mémoire-tampon, une deuxième entrée de ce comparateur de phase recevant le signal issu de moyens de retard (20) recevant un signal représentatif du rythme de lecture de ladite mémoire-tampon, ces derniers moyens de retard appliquant aux impulsions de ce signal un retard constant, noté Mo, tel que Mo x TL= No x TE où TL et TE désignent respectivement la période du signal de rythme de lecture et la période du signal de rythme d'écriture de ladite mémoire-tampon.

# FIG.1

# FIG.3

# FIG.2

FIG.4

EP 0 643 501 A1

**Office européen**

**des brevets**

# RAPPORT DE RECHERCHE EUROPEENNE

Numero de la demande

EP 94 40 2001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO-A-93 16536 (NOKIA TELECOMMUNICATIONS OY)<br>* page 5, ligne 2 - ligne 11 *<br>* page 5, ligne 19 - ligne 32 *<br>* page 9, ligne 16 - page 11, ligne 16 *<br>--- | 1-4 | H04J3/07 |
| A | CONTRIBUTION TO T1 STANDARDS PROJECT - T1X1.4; NORTHERN TELECOM INCORPORATED; RESEARCH TRIANGLE PARK., 17 Décembre 1986, NORTH CAROLINA (US)<br>pages 1 - 6<br>MALCOM BETTS 'Effects of pointer manipulations on network wander characteristics.'<br>* page 3, ligne 9 - ligne 23 *<br>--- | 1,2,4 | |
| A | EP-A-0 481 847 (S.A.T.)<br>* colonne 4, ligne 4 - colonne 6, ligne 24 *<br>----- | 1,2,4 | |
| | | | **DOMAINES TECHNIQUES RECHERCHES (Int.Cl.6)**<br><br>H04J |

Le présent rapport a été établi pour toutes les revendications

| Lieu de la recherche | Date d'achèvement de la recherche | Examinateur |
|---|---|---|
| LA HAYE | 6 Décembre 1994 | VAN DEN BERG, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

10